# EUROPEAN PATENT APPLICATION

(11) **EP 2 595 051 A2**
(43) Date of publication of application: **22.05.2013**
(21) Application number: 12176114.2
(22) Date of filing: 12.07.2012
(51) Int. Cl.: G06F 3/14, G09G 5/00

(54) **System and method for video routing and display**

(30) Priority: 21.11.2011 US 201161562405 P; 02.03.2012 TW 101107048
(71) Applicant: Acer Incorporated, New Taipei City 221 (TW)
(72) Inventor: Sip, Kim Yeung, 221 New Tapei City (TW)
(74) Representative: Becker Kurig Straus

(57) **Abstract**

A system and a method for video routing and display are provided. The system comprises a host, a video output apparatus and a graphic processing apparatus. The video output apparatus is connected to the host through a first transmission interface for respectively receives a video data and a video streaming through a first channel and a second channel of the first transmission interface. The graphic processing apparatus is connected to the video output apparatus through a second transmission interface, by which a third channel and a fourth channel of the second transmission interface are respectively connected to the first channel and the second channel of the first transmission interface. The graphic processing apparatus receives the video data in the first channel through the third channel, processes the video data, and transmits the processed video data to the video output apparatus through the fourth channel for outputting the processed video data.

## Description

This application claims the priority benefit of U.S. Provisional Application serial. no. 61/562,405, filed on November 21, 2011. This application also claims the priority benefit of a Taiwan application serial no. 101107048, filed on March 2, 2012. The entirety of each of the above-mentioned patent applications is hereby incorporated by reference herein and made a part of this specification.

### BACKGROUND OF THE INVENTION

### Field of the Invention

The present invention relates to a display system and a display method, and more particularly, to a system and a method for routing and displaying a video.

### Description of Related Art

With the development of technology, computer functions tend to be more various, and numerous peripheral equipments have been launched to the market. For users' convenience to upgrade computer performance or expand computer functions, bus slots, such as accelerated graphics port (AGP) slots, peripheral component interconnect (PCI) slots or PCI express (PCI-E) slots, are commonly disposed on motherboard of the computer for the users to insert expansion cards, such as a video card, an audio card, or a network card. In addition, expansion interfaces, such as a firewire or a universal serial bus (USB) are also disposed on the computer host for the users to connect external apparatuses, such as a hard disk or a printer.

For simplification, in current computer architecture, an integrated graphic processing unit (GPU) is built in the central processing unit (CPU) or motherboard so as to assist the CPU in executing graphic computations. However, as for three-dimensional (3D) games, high-definition movies or animations which require a great amount of graphic computations, computing performance of the CPU or the integrated GPU are still insufficient, and therefore it is required to additionally dispose an independent GPU with higher computing performance for assisting in graphic computations. Such GPU is generally designed in a form of an interface card so as to be inserted in the bus of the computer host for executing graphic computation tasks instructed by the CPU.

nVIDIA Corporation has launched an Optimus technique, by which a GPU is connected to the computer via a PCI-E interface so as to assist the CPU in executing graphic computation. Under a normal display demand, only the integrated GPU built in the CPU or the motherboard is used to execute the graphic computation, and the external GPU is powered off so as to save power consumption. On the other hand, under a demand of great graphic computation, the external GPU is powered on to execute the graphic computation and the computation result is directly output to a frame buffer via the PCI-E interface, so as to be displayed on the monitor. Thereby, the graphic computation can be dynamically switched without rebooting the computer or closing application programs.

The above-mentioned Optimus technique mainly considers power-saving and provides a way to optimize the computing performance of the computer and satisfy users' requirement on graphic performance. However, this technique requires sufficient interface bandwidth (e.g. 16 times of PCI-E interface bandwidth) to achieve switching of graphic computation. If the GPU is moved out of the computer and is externally connected with the computer via an interface such as an USB interface, then a data transmission bottleneck appears due to insufficient interface bandwidth, and the performance of graphic computation is affected.

### SUMMARY OF THE INVENTION

Accordingly, the invention provides a system and a method for video routing and display, by which a graphic processing unit (GPU) is externally connected with the computer so as to resolve the data transmission bottleneck resulted from the externally connected GPU.

The invention provides a system for video routing and display, which includes a host, a video output apparatus and a graphic processing apparatus. The host is used for outputting a video data and a video streaming. The video output apparatus includes a first output interface and a first transmission interface, and the video output apparatus is connected with the host by using the first transmission interface. The video output apparatus receives the video data and the video streaming via a first channel and a second channel of the first transmission interface. The graphic processing apparatus includes a second transmission interface and is connected with the video output apparatus by using the second transmission interface, by which a third channel and a fourth channel of the second transmission interface are respectively connected with the first channel and the second channel of the first transmission interface. The graphic processing apparatus receives the video data in the first channel via the third channel, processes the video data, and transmits the processed video data to the video output apparatus via the fourth channel. The video output apparatus outputs the processed video data by using the first output interface.

In an embodiment of the invention, the video output apparatus further outputs the video streaming received via the second channel by using the first output interface.

In an embodiment of the invention, the host includes a processing unit for detecting a connection status of the first output interface and a usage status of the graphic processing apparatus, and accordingly controlling the video output apparatus to output the video streaming received via the second channel or output the processed video data received via the fourth channel.

In an embodiment of the invention, the host further includes a second output interface connected with a monitor and a demultiplexer connected with the second output interface. The demultiplexer is used for retrieving the processed video data in the second channel and outputting the processed data to the monitor for display by using the second output interface, in which the processed video data in the second channel is received from the fourth channel.

In an embodiment of the invention, the processing unit further detects the connection status of the first transmission interface and the second transmission interface and the usage status of the graphic processing apparatus and accordingly controls the video output apparatus to output the processed video data via the fourth channel by using the first output interface or output the processed video data received via the second channel by using the second output interface.

In an embodiment of the invention, the processing unit detects the connection status of the first transmission interface and the second transmission interface by using a hot-plug technique.

The invention provides a method for video routing and display, which is adapted to a host to control a video output apparatus to output a video data processed by a graphic processing apparatus. The video output apparatus is connected with the host by using a first transmission interface. The graphic processing apparatus is connected with the video output apparatus by using a second transmission interface. The first channel and the second channel of the first transmission interface are respectively connected with the third channel and the fourth channel of the second transmission interface. In the method, the host detects a connection status of a first output interface of the video output apparatus, When the first output interface is detected to be connected with a display apparatus, the host transmits the video data to the graphic processing apparatus via the first channel and the third channel. The graphic processing apparatus processes the video data received via the third channel and transmits the processed video data to the video output apparatus via the fourth channel. Finally, the video output apparatus outputs the processed video data received via the fourth channel by using the first output interface.

In an embodiment of the invention, the host further outputs a video streaming to the video output apparatus via the second channel and controls the video output apparatus to output the video streaming by using the first output interface.

In an embodiment of the invention, the host further detects the connection status of the first transmission interface and the usage status of the graphic processing apparatus and accordingly controls the video output apparatus to output the video streaming received via the second channel or output the processed video data received via the fourth channel.

In an embodiment of the invention, the host further retrieves the processed video data in the second channel by using a demultiplexer and outputs the processed video data to a monitor for display by using a second output interface, in which the processed video data in the second channel is received from the fourth channel.

In an embodiment of the invention, the host further detects the connection status of the first transmission interface and the second transmission interface and the usage status of the graphic processing apparatus and accordingly controls the video output apparatus to output the processed video data received via the fourth channel by using the first output interface or output the processed video data received via the second channel by using the second output interface.

In an embodiment of the invention, the host further detects the connection status of the first transmission interface and the second transmission interface by using a hot-plug technique.

In an embodiment of the invention, the first transmission interface and the second transmission interface are Thunderbolt™ interfaces. The first channel and the third channel are data transmission channels used for transmitting a data. The second channel and the fourth channel are display channels used for transmitting a video data.

In view of the foregoing, with the system and method for video routing and display according to the invention, the computer host is connected with the graphic processing apparatus by using the Thunderbolt™ interface. The video output apparatus is disposed between the computer host and the graphic processing apparatus to replace the computer host to output the video data processed by the graphic processing apparatus. Accordingly, the data transmission bottleneck resulted from the externally connected GPU can be resolved.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

Fig. 1 is a schematic diagram illustrating data transmission via the Thunderbolt™ interface according to an embodiment of the invention.

Fig. 2 is a block diagram illustrating a system for video routing and display according to an embodiment of the invention.

Fig. 3 is a flow chart illustrating a method for video routing and display according to an embodiment of the invention.

Fig. 4 is a block diagram illustrating a system for video routing and display according to an embodiment of the invention.

Fig. 5 is a flow chart illustrating a method for video routing and display according to an embodiment of the invention.

### DESCRIPTION OF EMBODIMENTS

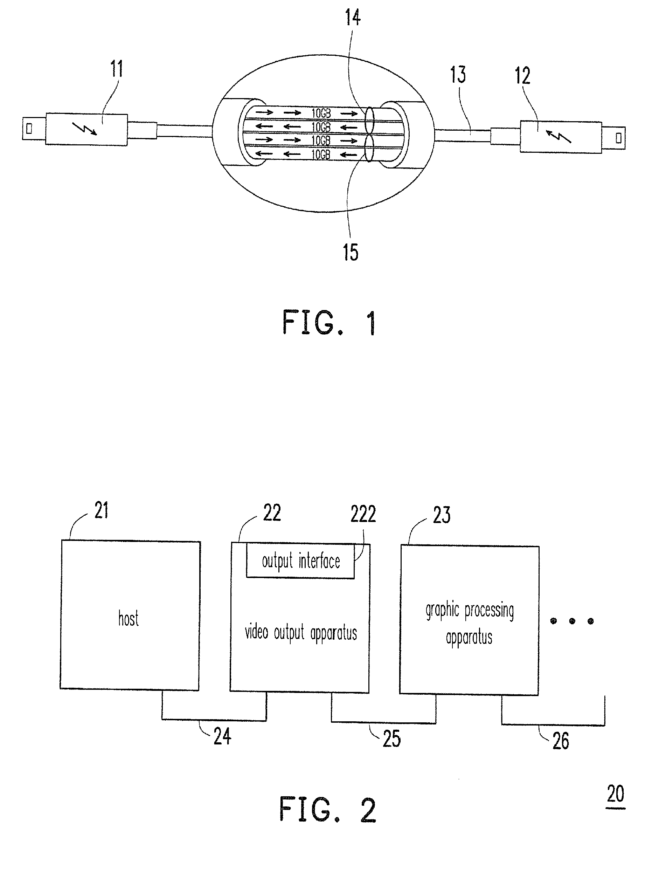

The Thunderbolt™ interface launched by Intel Corporation integrates Peripheral Component Interconnect Express (PCI-E) and DisplayPort so as to simultaneously transmit data and video streaming. Fig. 1 is a schematic diagram illustrating data transmission of the Thunderbolt™ interface according to an embodiment of the invention. Referring to Fig. 1, the Thunderbolt™ technology provides two channels 14 and 15 in a same set of connectors 11 and 12 or in a same cable 13, in which the throughput for uploading and downloading transmission can be up to ten Gigabits (GB) per second, and therefore the computer and the peripheral equipments can transmit data to each other in a high speed. The bandwidth provided by the Thunderbolt™ also supports multiple high-speed apparatuses connected in a daisy-chain without using hubs or switches.

The invention utilizes aforesaid characteristics of high transmission bandwidth and daisy-chain connection provided by the Thunderbolt™ interface to design a graphic processing unit (GPU) as an independent apparatus and externally connect the GPU with a computer host by using the Thunderbolt™ interface. By using an independent video output apparatus as a medium for data transmission and video output, the video routing and display is optimized and the data transmission bottleneck resulted from the externally connected GPU can be resolved.

Fig. 2 is a block diagram illustrating a system for video routing and display according to an embodiment of the invention. Referring to Fig. 2, a video routing and display system 20 of the present embodiment includes a host 21, a video output apparatus 22 and a graphic processing apparatus 23, and functions thereof are described as follows.

The host 21 is a terminal apparatus, such as a desktop, a laptop or a workstation. The host 21 includes a processor and various types of input/output interfaces, which are connected with peripheral equipments to process programs executed by a user. The host 21 also includes storage equipments, such as a memory or a hard disk, for storing programs or other data executed by the processor. Here, the host 21 not only outputs video data but also decodes the video data and then outputs the decoded video data in a form of video streaming.

The video output apparatus 22 includes an output interface 222 and a first transmission interface 24 and is connected with the host 21 by using the first transmission interface 24. The video output apparatus 22 receives the video data and the video streaming outputted from the host 21 respectively via a first channel and a second channel of the first transmission interface 24. The first transmission interface 24 is, for example, a Thunderbolt™ interface, and the first channel and the second channel are a data transmission channel and a display channel in the Thunderbolt™ interface, which are used for transmitting the video data and the video streaming, respectively.

The graphic processing apparatus 23 includes a graphic processing unit (GPU) and is connected with the video output apparatus 22 by using a second transmission interface 25. The second transmission interface 25 is, for example, a Thunderbolt™ interface which supports dasiy-chain connection, by which a third channel and a fourth channel of the second transmission interface 25 are respectively connected with the first channel and the second channel through the video output apparatus 22. The graphic processing apparatus 23 receives the video data in the first channel via the third channel, processes the video data, and transmits the processed video data to the video output apparatus 22 via the fourth channel. The video output apparatus 22 outputs the processed video data by using the output interface 222.

In detail, each PCI-E interface requires 4Gbps of bandwidth, while the data transmission channel of Thunderbolt™ interface provides only 100Gbps of bandwidth. Thus, compared to the bandwidth of 16 PCI-E interfaces used by a built-in CPU, the bandwidth of the Thunderbolt™ interface is insufficient. If the decoding of video data is executed by the exteranlly connected GPU, the display data returned by the GPU occupies 3Gbps of bandwidth, which results in degradation of display performance.

To solve the problem of insufficient transmission bandwidth, in the present invention, when the video output apparatus 22 is connected with a display apparatus, the output interface 222 of the video output apparatus 22 is used to output the video data processed by the graphic processing apparatus 23. An embodiment is given below for further illustration.

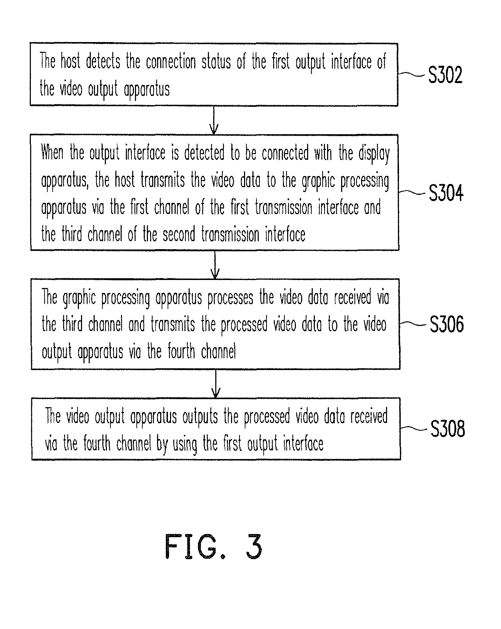

Fig. 3 is a flow chart illustrating a method for video routing and display according to an embodiment of the invention. Referring to FIG. 3, the method of the embodiment is adapted to the afore-mentioned video routing and display system 20, and is suitable for routing the video data processed by the graphic processing apparatus 23 to the video output apparatus 22 for output when a display apparatus is externally connected with the video output apparatus 22. Steps of the method according to the present embodiment will be described in detail below with reference to the components shown in FIG. 2.

First, the host 21 detects a connection status of the output interface 222 of the video output apparatus 22 (step S302). The video output apparatus 22 utilizes, for example, hot-plug technology to detect a voltage of the external apparatus inserted in the output interface 222 by using hardware, such as a pin or a goldfinger, disposed on the output interface 222 and accordingly determines whether an external apparatus is inserted therein, and returns a detection result back to the host 21 by using the first transmission interface 24.

When the host 21 detects that the output interface 222 is connected with a display apparatus, the host 21 transmits the video data to the graphic processing apparatus 23 via the first channel of the first transmission interface 24 and the third channel of the second transmission interface 25 (step S304). In detail, the first transmission interface 24 is connected with the second transmission interface 25 through the video output apparatus 22 in a daisy-chain, in which the first channel of the first transmission interface 24 is serially connected with the third channel of the second transmission interface 25. Thus, when the host 21 outputs the video data via the first channel of the first transmission interface 24, the video data is transmitted to the graphic processing apparatus 23 via the first channel and the third channel.

Then, the graphic processing apparatus 23 processes the video data received from the third channel and transmits the processed video data to the video output apparatus 22 via the fourth channel (step S306). The GPU in the graphic processing apparatus 23 is dedicated to graphic processing, and by using the independent GPU to process graphic computation of the video data, an overall graphic performance of the system can be enhanced. The video data processed by the graphic processing apparatus 23 is, for example, transmitted in a form of video streaming to the video output apparatus 22 via the fourth channel. Finally, the processed data received from the fourth channel is outputted by the video output apparatus 22 by using the output interface 222 (step S308).

By the architecture of the video routing and display system 20 and the method for video routing and display as described in above, the video data can be transmitted to the video output apparatus 22 for output via the display channel of the Thunderbolt™ interface without occupying the transmission bandwidth of the data transmission channel. Thus, the problem of insufficient bandwidth for data transmission when a GPU is externally connected can be resolved.

It is to be mentioned that besides outputting the processed video data by the aforementioned graphic processing apparatus and video output apparatus, the invention further integrates the computing performance of the host processor and the external GPU. Based on the connection status of the host externally connected with a monitor or the video output apparatus externally connected with the monitor, a routing of the video data is dynamically adjusted so as to optimize the computing and display performance. Another embodiment is illustrated in the following.

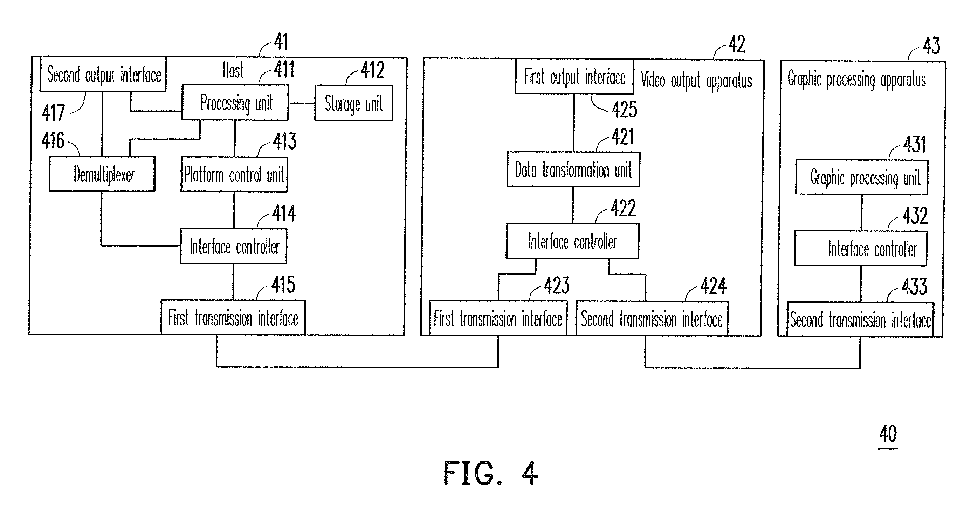

Fig. 4 is a block diagram illustrating a system for video routing and display according to an embodiment of the invention. Referring to FIG. 4, a video routing and display system 40 of the present embodiment includes a host 41, a video output apparatus 42 and a graphic processing apparatus 43, and functions thereof are described as follows.

The host 41 includes a processing unit 411, a storage unit 412, a platform control unit 413, an interface controller 414, a first transmission interface 415, a demultiplexer 416 and a second output interface 417. The processing unit 411 is, for example, a central processing unit (CPU), a microprocessor, a digital signal processor (DSP), a programmable controller, an application specific integrated circuits (ASIC), a programmable logic apparatus (PLD) or other similar apparatuses, and is used for executing computation tasks requested by the host 41. The storage unit 412 is a storage medium, such as a hard disk or a memory, which is used for storing programs or other data executed by the processing unit 411. The platform control unit 413 is, for example, a platform controller hub (PCH), whose function is similar to an ordinary south-bridge chip, and is used for controlling various types of input/output interfaces and storage interfaces. The interface controller 414 is a Thunderbolt™ controller, namely, a Light Ridge, an Eagle Ridge or a Cactus Ridge controller, which is capable of controlling data transmitted in the data transmission channel and the display channel of the Thunderbolt™ interface. The first transmission interface 415 is, for example, a Thunderbolt™ connector, which is used for connecting with a transmission wire in compliance with the Thunderbolt™ interface standards.

In addition, the demultiplexer 416 is connected with the interface controller 414 and the second output interface 417. The demultiplexer 416 retrieves the processed video data transmitted by the first transmission interface 415 and then outputs the same by using the second output interface 417. The second output interface 417 is connected with the processing unit 411 and the demultiplexer 416 respectively so as to output the video data outputted by the processing unit 411 or the demultiplexer 416.

The video output apparatus 42 includes a data transformation unit 421, an interface controller 422, a first transmission interface 423, a second transmission interface 424 and a first output interface 425. The data transformation unit 421 is used for transforming the data received by the first transmission interface 423 and the second transmission interface 424 into the data which can be displayed by a display apparatus and then transmitting the transformed data to the first output interface 425 for output. The interface controller 422 is, for example, a Thunderbolt™ controller whose function is similar to that of the interface controller 414. The first transmission interface 423 and the second transmission interface 424 are Thunderbolt™ connectors, which are respectively used for connecting with the host 41 and the graphic processing apparatus 43.

The graphic processing apparatus 43 includes a GPU 431, an interface controller 432, and a second transmission interface 433. The interface controller 432 is, for example, a Thunderbolt™ controller whose function is similar to that of the interface controller 414. The second transmission interface 433 is, for example, a Thunderbolt™ interface, which is used for connecting with the video output apparatus 42, by which the third channel and the fourth channel of the second transmission interfaces 433 and 424 are respectively connected with the first channel and the second channel of the first transmission interfaces 423 and 415 through the video output apparatus 42. Accordingly, the interface controller 432 is able to receive the video data in the first channel via the third channel, process the received video data, and transmit the processed video data to the video output apparatus 42 via the fourth channel.

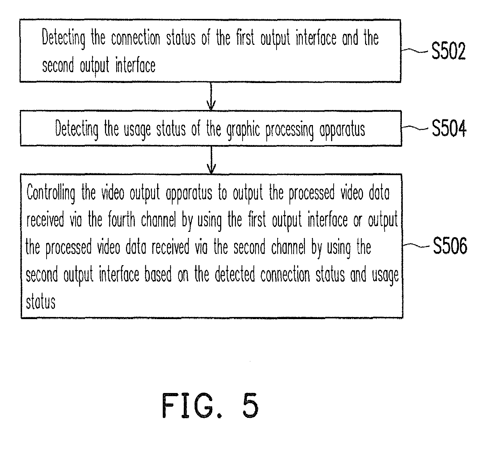

Fig. 5 is a flow chart illustrating a method for video routing and display according to an embodiment of the invention. Referring to FIG. 5, the present embodiment is adapted to the above-described video routing and display system 40 and is suitable for adjusting the routing of video data based on the connection status of the external display apparatus and the usage status of the graphic processing apparatus. Steps of the method according to the present embodiment will be described in detail below with reference to the components shown in FIG. 4.

First, the processing unit 411 of the host 41 detects the connection status between the first output interface 425 of the video output apparatus 42 and the second output interface 417 thereof (step S502) and then detects the usage status of the graphic processing apparatus 43 (step S504).

Then, according to the detected connection status and the usage status, the processing unit 411 controls the video output apparatus 42 to output the processed video data received via the fourth channel by using the first output interface 425, or output the processed video data received via the second channel by using the second output interface 417 (step S506).

In detail, the architecture of the video routing and display system 40 according to the present embodiment allows two or more videos to be simultaneously displayed and can route the video data to different output interfaces in the video routing and display system 40. The processing unit 411 of the host 41 analyzes the computing performance of each processor and accordingly arranges the video routing so as to achieve optimization of video routing and display. Another embodiment is given below for illustration.

In an embodiment, if only the first output interface 425 is externally connected with a display apparatus and the graphic processing apparatus 43 is not allowed or required to be used (i.e. less computation demand), the processing unit 411 processes the video data by itself and transmits the processed video data to the video output apparatus 42 via a display channel of the first output interface 425 so as to output the same by using the first output interface 425.

In another embodiment, if both the first output interface 425 and the second output interface 417 are externally connected with the display apparatus and the graphic processing apparatus 43 is allowed to be used, the processing unit 411 routes the video data processed by the graphic processing apparatus 43 to all output interfaces. The detailed process is as follows. The host 41 transmits the video data to the graphic processing apparatus 43 via the data transmission channel of the first transmission interfaces 415 and 423 and the data transmission channel of the second transmission interfaces 424 and 433. After the graphic processing apparatus 43 completes processing the video data, the processed video data is transmitted to the video output apparatus 42 via the display channel of the second transmission interfaces 424 and 433. Finally, the processed video data is outputted by using the first output interface 425. In addition, the processed video data is further transmitted to the host 41 via the display channel of the first transmission interfaces 415 and 423, retrieved by the demultiplexer 416, and finally outputted by using the second output interface 417.

To sum up, in the system and method for video routing and display of the invention, the video output apparatus and the graphic processing apparatus are serially connected with the host, and the graphic processing task of the video data is given to the external graphic processing apparatus such that graphic performance of the host can be enhanced. In addition, the video data routing is adjusted based on the connection status of the external display apparatus and the usage status of the graphic processing apparatus, and therefore the data transmission bottleneck resulted from the externally connected graphic processing apparatus can be resolved.

## Claims

1. A system for video routing and display, comprising:
a host (41), outputting a video data and a video streaming;
a video output apparatus (42) comprising a first output interface (425) and a first transmission interface (423), connected with the host (41) by using the first transmission interface (423) and configured to receive the video data and the video streaming via a first channel and a second channel of the first transmission interface (423); and
a graphic processing apparatus (43) comprising a second transmission interface (433), connected with the video output apparatus (42) by using the second transmission (433) interface, by which a third channel and a fourth channel of the second transmission interface (433) are respectively connected with the first channel and the second channel of the first transmission interface (423), and configured to receive the video data in the first channel via the third channel, process the video data, and transmit the processed video data to the video output apparatus (42) via the fourth channel, wherein the video output apparatus (42) outputs the processed video data by using the first output interface (425).

2. The system for video routing and display according to claim 1, wherein the video output apparatus (42) further outputs the video streaming received via the second channel by using the first output interface (425).

3. The system for video routing and display according to claim 1 or 2, wherein the host (41) comprises:
a processing unit (411), detecting a connection status of the first output interface (425) and a usage status of the graphic processing apparatus (43) and accordingly controlling the video output apparatus (42) to output the video streaming received via the second channel or output the processed video data received via the fourth channel.

4. The system for video routing and display according to any one of claims 1 to 3, wherein the host (41) further comprises:
a second output interface (417), connected with a monitor; and
a demultiplexer (416), connected with the second output interface (417) and configured to retrieve the processed video data in the second channel and output the processed video data by using the second output interface (417) to the monitor for display, wherein the processed video data in the second channel is received from the fourth channel.

5. The system for video routing and display according to any one of claims 1 to 4, wherein the processing unit (411) further detects the connection status of the first transmission interface (415, 423) and the second transmission interface (424, 433) and the usage status of the graphic processing apparatus (43) and accordingly controls the video output apparatus (42) to output the processed video data received via the fourth channel by using the first output interface (425) or to output the processed video data received via the second channel by using the second output interface (417).

6. The system for video routing and display according to any one of claims 1 to 5, wherein the processing unit (411) detects the connection status of the first transmission interface (415, 423) and the second transmission interface (424, 433) by using a hot-plug technique.

7. The system for video routing and display according to any one of claims 1 to 6, wherein the first transmission interface (415, 423) and the second transmission interface (424, 433) are Thunderbolt™ interfaces.

8. The system for video routing and display according to any one of claims 1 to 7, wherein the first channel and the third channel are data transmission channels used for transmitting a data, and the second channel and the fourth channel are display channels used for transmitting a video data.

9. A method for video routing and display, adapted to a host (41) to control a video output apparatus (42) to output a video data processed by a graphic processing apparatus (43), wherein the video output apparatus (42) is connected with the host (41) by using a first transmission interface (415, 423), the graphic processing apparatus (43) is connected with the video output apparatus (42) by using a second transmission interface (424, 433), and a first channel and a second channel of the first transmission interface (415, 423) are respectively connected with a third channel and a fourth channel of the second transmission interface (424, 433), the method comprising:
the host (41) detecting (S302) a connection status of a first output interface (425) of the video output apparatus (42);
when the first output interface (425) is detected to be connected with a display apparatus, the host (41) transmitting (S304) the video data to the graphic processing apparatus (43) via the first channel of the first transmission interface (415, 423) and the third channel of the second transmission interface (424, 433);
the graphic processing apparatus (43) processing (S306) the video data received via the third channel and transmitting the processed video data to the video output apparatus (42) via the fourth channel; and
the video output apparatus (42) outputting (S308) the processed video data received via the fourth channel by using the first output interface (425).

10. The method for video routing and display according to claim 9, wherein the host (41) further outputs a video streaming to the video output apparatus (42) via the second channel and controls the video output apparatus (42) to output the video streaming by using the first output interface (425).

11. The method for video routing and display according to claim 9 or 10, wherein the host (41) further detects (S502, S504) a connection status of the first transmission interface (415, 423) and a usage status of the graphic processing apparatus (43) and accordingly controls (S506) the video output apparatus (42) to output the video streaming received via the second channel or output the processed video data received via the fourth channel.

12. The method for video routing and display according to any one of claims 9 to 11, wherein the host (41) further retrieves the processed video data in the second channel by using a demultiplexer (416) and outputs the processed video data by using a second output interface (417) to a monitor for display, wherein the processed video data in the second channel is received from the fourth channel.

13. The method for video routing and display according to any one of claims 9 to 12, wherein the host (41) further detects the connection status of the first transmission interface (415, 423) and the second transmission interface (424, 433) and the usage status of the graphic processing apparatus (43) and accordingly controls the video output apparatus (42) to output the processed video data received via the fourth channel by using the first output interface (425) or output the processed video data received via the second channel by using the second output interface (417).

14. The method for video routing and display according to any one of claims 9 to 13, wherein the host (41) further detects the connection status of the first transmission interface (415, 423) and the second transmission interface (424, 433) by using a hot-plug technique.

15. The method for video routing and display according to any one of claims 9 to 14, wherein the first transmission interface (415, 423) and the second transmission interface (424, 433) are Thunderbolt™ interfaces.

16. The method for video routing and display according to any one of claims 9 to 15, wherein the first channel and the third channel are data transmission channels used for transmitting a data, and the second channel and the fourth channel are display channels used for transmitting a video data.
